# EUROPEAN PATENT APPLICATION

(11) **EP 1 577 206 A2**
(43) Date of publication of application: **21.09.2005**
(21) Application number: 04021389.4
(22) Date of filing: 08.09.2004
(51) Int. Cl.: B62K 25/08, F16F 1/00

(54) **Front fork of two-wheeled vehicle or the like**

(30) Priority: 17.03.2004 JP 2004077228; 25.05.2004 JP 2004155192
(71) Applicant: SHOWA CORPORATION, Saitama (JP)
(72) Inventor: Nakano, Koichi, Asaba-cho Iwata-gun Shizuoka (JP); Sugata, Norihisa, Asaba-cho Iwata-gun Shizuoka (JP)
(74) Representative: Grünecker, Kinkeldey, Stockmair & Schwanhäusser Anwaltssozietät

(57) **Abstract**

In a front fork 100 of a two-wheeled vehicle or the like, an annular oil gap 121 sectioned by two bushes 103, 104 is provided between an outer tube 101 and an inner tube 102, a movable partition wall member 130 is provided in an inner periphery of the inner tube 102, an oil chamber 122 is sectioned in a leading end side of the inner tube 102, a gas chamber 123 is sectioned in a base end side of the inner tube 102, the annular oil gap 121 is communicated with the oil chamber 122, and the annular oil gap 121 and the oil chamber 122 are sectioned in a sealing manner with respect to the gas chamber 123 by the movable partition wall member 130.

## Description

The present invention relates to a front fork of a two-wheeled vehicle or the like.

In Japanese Patent No. 3264876 (patent document 1), there is disclosed a front fork in which a suspension spring element and/or a damping force generating element is not included in a stand pipe (an inner tube) and/or a slide pipe (an outer tube), and the stand pipe and the slid pipe are telescopic and slidable.

The front fork in the patent document 1 is structured such that the stand pipe is slidably inserted into the slide pipe via a slide bearing 4 (a bush) provided in an inner periphery of an opening portion of the slide pipe, and an oil corresponding to a lubricant for lubricating the slide bearing 4 is filled in an inner chamber of the slide pipe and the stand pipe. Further, a filling amount of the oil is reduced and a weight saving of the front fork is achieved by arranging a hollow formed body within the inner chamber of the slide pipe and the stand pipe.

In the front fork described in the patent document 1, since the weight saving is achieved by reducing the filling amount of the oil for lubricating the bush provided in the inner periphery of the opening portion of the stand pipe, it is necessary to employ the hollow formed body which is specially ordered. Accordingly, the structure becomes expansive.

An object of the present invention is to inexpensively provide a front fork of a two-wheeled vehicle or the like which can achieve a weight saving, by reducing a filling amount of an oil for lubricating a bush, an oil seal lip and the like provided in an inner periphery of an opening portion of an outer tube.

The present invention relate to a front fork of a two-wheeled vehicle or the like in which an inner tube is slidably inserted into an outer tube. A leading end of said inner tube is inserted into said outer tube from an opening portion of said outer tube, and two bushes guiding said inner tube are fitted and attached to an inner periphery of an opening portion side of said outer tube, and an inner periphery of a base end side apart from said opening portion in an axial direction. An annular oil gap sectioned by said two bushes is provided between said outer tube and said inner tube. A movable partition wall member is provided in an inner periphery of said inner tube, an oil chamber is sectioned in a leading end side of said inner tube, and a gas chamber is sectioned in a base end side of said inner tube, and said annular oil gap is communicated with the oil chamber in the leading end side of said inner tube, and said annular oil gap and said oil chamber are sectioned in a sealing manner with respect to said gas chamber by said movable partition wall member.

The present invention will be more fully understood from the detailed description given below and from the accompanying drawings which should not be taken to be a limitation on the invention, but are for explanation and understanding only.

The drawings:
FIG. 1 is a half sectional view showing a most extended state of a front fork;
FIG. 2 is an enlarged view of a lower portion of the front fork in FIG. 1;
FIG. 3 is an enlarged view of an upper portion of the front fork in FIG. 1;
FIG. 4 is an enlarged view of a main portion in FIG. 2;
FIGS. 5(A) and 5(B) show a bush, in which FIG. 5(A) is a front elevational view, and FIG. 5(B) is a plan view;
FIG. 6 is a front elevational view showing a modified embodiment of a bush;
FIG. 7 is a half cross sectional view showing a state in which an oil is filled in the front fork;
FIG. 8 is a half cross sectional view showing a most compressed state of the front fork;
FIGS. 9(A) and 9(B) show a modified embodiment of the front fork, in which FIG. 9(A) is a half cross sectional view showing a most compressed state, and FIG. 9(B) is a half cross sectional view showing a most extended state; and
FIG. 10 is an enlarged view of a main portion in FIG. 9(B).

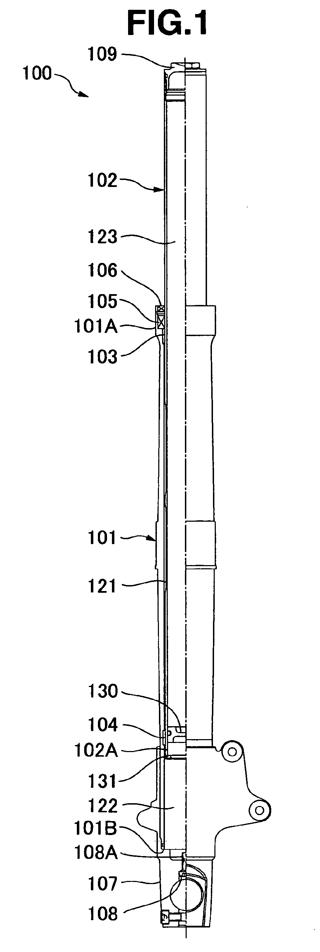

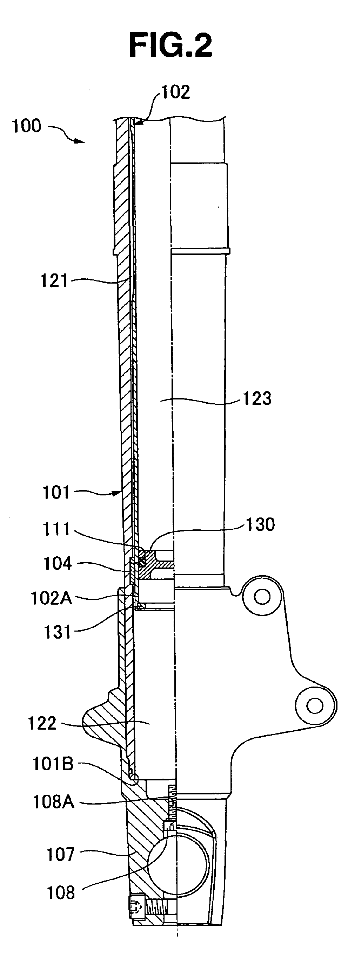

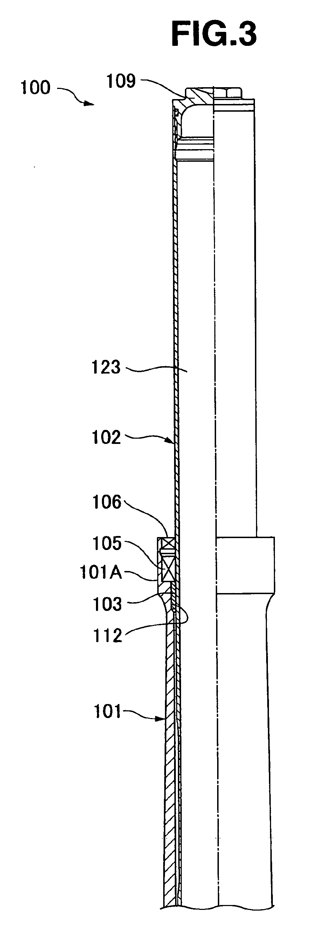

An erect type front fork 100 of a two-wheeled vehicle or the like is structured, as shown in FIGS. 1 to 3, such that an inner tube 102 in a vehicle body side is slidably erected in an outer tube 101 in an axle side. The front fork 100 does not include a suspension spring and a damping force generating apparatus.

The front fork 100 is structured such that a leading end 102A of the inner tube 102 is inserted to the outer tube 101 from an upper end opening portion 101A of the outer tube 101. Further, two upper and lower bushes 103 and 104 guiding the inner tube 102 are fitted and attached to two vertical positions of the inner periphery of the outer tube 101, in other words, an inner periphery in a side of the upper end opening portion 101A of the outer tube 101, and an inner periphery in a base end side which is apart from the upper end opening portion 101A in an axial direction. An oil seal 105 and a dust seal 106 are fitted and attached to the upper end opening portion 101A of the outer tube 101.

The base end of the outer tube 101 is coupled to an axle via an axle bracket 107, and the inner tube 102 is supported to a vehicle body side via upper and lower brackets (not shown).

A bolt hole 108A is provided in a bottom portion of the axle bracket 107 sealed to the base end of the outer tube 101, and a sealing bolt 108 is attached to and detached from the bolt hole 108A. A cap 109 is sealed to an upper end opening portion (a base end) of the inner tube 102.

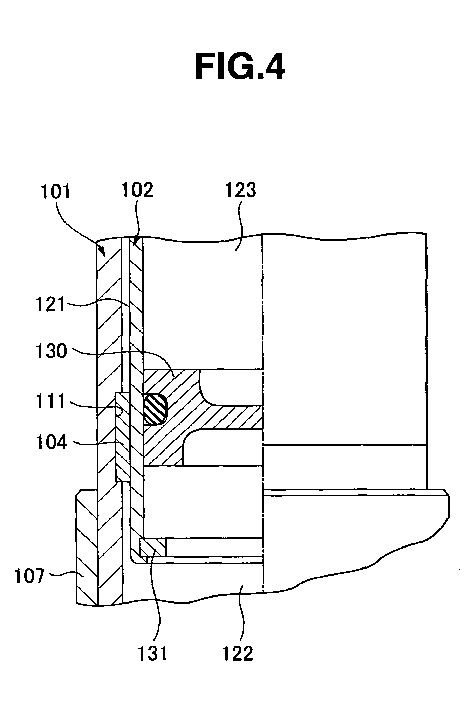

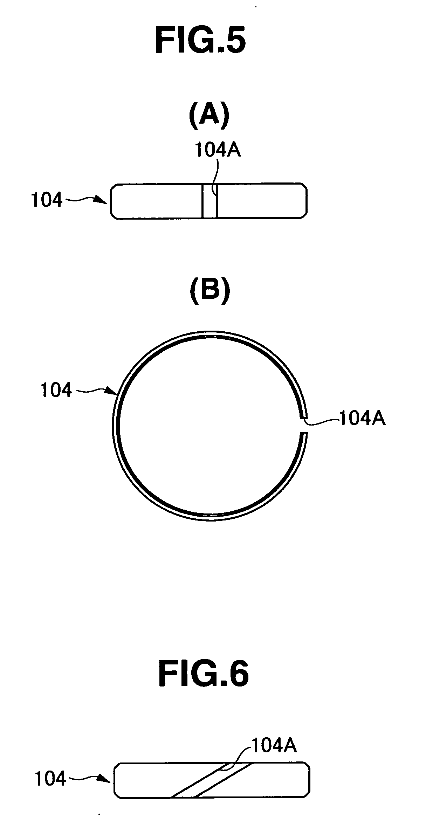

Accordingly, the front fork 100 is structured, as shown in FIG. 4, such that an annular groove 111 is formed in the inner periphery of the lower end (the base end side) of the outer tube 101 in accordance with a cutting process, and the annular lower bush 104 mentioned above is attached to an inner side of the annular groove 111. The annular groove 111 is constituted by a concave groove in which both side portions in an axial direction are closed by a step, within the inner peripheral surface of the outer tube 101. The lower bush 104 is constituted by an annular body as shown in FIG. 5, has a closed gap 104A formed in a straight shape along the axial direction of the bush 104 in a free state, and is attached to the annular groove 111 in a state of having the closed gap 104A. The lower bush 104 is inserted from the lower end opening portion 101B of the outer tube 101 in an elastically contracted state with respect to an inner diameter of the outer tube 101, under a state in which the outer tube 101 is not screwed and fastened to the axle bracket 107, and is elastically expanded with respect to a groove bottom of the annular groove 111.

In an assembled state of the front fork 100, an annular gap between the inner periphery of the outer tube 101 and an outer periphery of the inner tube 102 is formed smaller than a thickness of the lower bush 104, and the bush 104 attached to the annular groove 111 has the closed gap 104A

In this case, the upper bush 103 is attached to an attachment portion 112 which is cut such that an upper end side is open, under a pressure inserted state, in an inner periphery in a side of the upper end opening portion 101A of the outer tube 101, and the closed gap becomes zero.

Therefore, in accordance with the present embodiment, the following operations and effects can be achieved.

(1) Since it is not necessary to cut the inner periphery of the outer tube 101 in a long range extending from an upper end portion or a lower end portion along an axial direction, at a time of forming the annular groove 111 for the lower bush 104, it is possible to shorten a working time.

Since the annular groove 111 in the base end side of the outer tube 101 is formed in a portion as close as possible to the base end side of the outer tube main body, a run-out of the outer tube 101 is not generated at a time of forming the annular groove 111 in accordance with the cutting process, whereby it is possible to accurately form the annular groove 111.

(2) Since the lower bush 104 is inhibited from moving in an axial direction by both end portions of the annular groove 111, the bush 104 is not displaced in the axial direction.

(3) Since the gap between the inner periphery of the outer tube 101 and the outer periphery of the inner tube 102 is made smaller than the thickness of the bush 104, the bush 104 does not drop into the gap even if the bush 104 is contracted at an amount of the closed gap 104A.

(4) In the case that the bush is pressure inserted into the conventional attachment portion in which one end side is open, the bush is pressure inserted such that the closed gap of the bush is zero. On the contrary, in accordance with the present invention, the bush 104 is expanded within the annular groove 111, and the closed gap 104A is generated in the bush 104. In the bush 104 in accordance with the present invention mentioned above, a friction with the outer periphery of the inner tube 102 becomes fixed from an initial stage of the stroke start in comparison with the conventional press-in bush having zero closed gap. Because the bush 104 is not closely attached to the inner periphery of the annular groove 111, whereby the bush 104 can be slightly expanded within the annular groove 111, so that it is considered that the friction at the initial stage of the start is reduced in comparison with the friction in the conventional press-in bush. Since the friction is fixed, it is possible to improve an operability of the front fork 100. In particular, since the friction at the initial stage of the start is reduced, it is possible to improve an initial operability of the front fork 100.

FIG. 6 shows a modified embodiment of the bush 104, in which the closed gap 104A is formed so as to be inclined with respect to the axial direction of the bush 104.

In the bush 104 in FIG. 6, the closed gap 104A is formed so as to be inclined with respect to the axial direction of the bush 104. As a result, a bearing surface of the bush 104 exists in all the area in a peripheral direction of the bush 104. Accordingly, in comparison with the structure in which the closed gap is formed along the axial direction, there is no portion which does not axially support the outer peripheral surface of the inner tube 102 in the peripheral direction of the bush 104, and it is possible to prevent a scratch from being generated on the outer peripheral surface of the inner tube 102 due to a slide motion with the closed gap 104A of the bush 104.

Further, in the front fork 100, the bushes 103 and 104 and a lubricating oil of an oil seal 105 can be loaded to an annular gap sectioned by two upper and lower bushes 103 and 104, between the inner periphery of the outer tube 101 and the outer periphery of the inner tube 102, and the annular gap is formed as an annular oil gap 121.

Further, a movable partition wall member 130 is provided in the inner periphery of the inner tube 102. The movable partition wall member 130 is provided with an oil chamber 122 sectioned together with the inner periphery of the outer tube 101 and the bottom portion of the axle bracket 107, in a leading end side of the inner tube 102, and sections a gap chamber 123 in a base end side of the inner tube 102. In the present embodiment, a movable partition wall member 130 is provided in an inner periphery in a leading end side of the inner tube 102, and makes a volumetric capacity of the oil chamber 122 small.

The movable partition wall member 130 is constituted by a free piston which slides along the inner periphery of the inner tube 102 in a liquid tight manner, however, may be constituted by a bladder such as a rubber or the like in which an outer edge is sealed to the inner periphery of the inner tube 102.

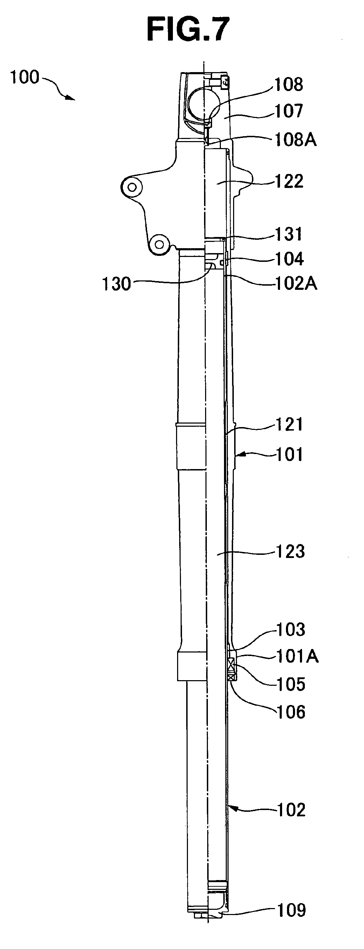

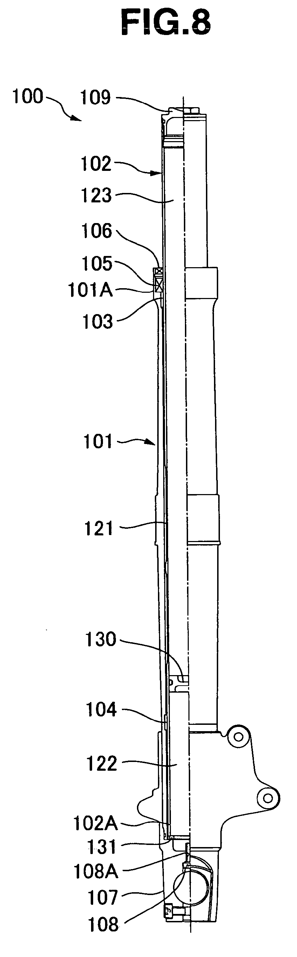

At a time of injecting the oil into the front fork 100, the oil is injected into the oil chamber 122 from the bolt hole 108A of the axle bracket 107, in a state in which the front fork 100 is inverted such that the outer tube 101 is arranged in an upper side, the inner tube 102 is arranged in a lower side, and the movable partition wall member 130 is brought into contact with a stopper 131 provided in the leading end portion in the inner periphery of the inner tube 102, as shown in FIG. 7, and thereafter the sealing bolt 108 is sealed to the bolt hole 108A. When the outer tube 101 and the inner tube 102 are expanded and contracted in a state in which the front fork 100 is used in an erected manner, the movable partition wall member 130 moves upward from the stopper 131 at an amount of the volumetric capacity at which the inner tube 102 moves forward into the oil chamber 122. FIG. 8 shows a most contracted state of the front fork 100.

At this time, the front fork 100 communicates the annular oil gap 121 between the outer tube 101 and the inner tube 102 with the oil chamber 122 in the leading end side of the inner tube 102, and sections the annular oil gap 121 and the oil chamber 122 in a sealing manner with respect to the gas chamber 123, in the movable partition wall member 130. In the present embodiment, the annular oil gap 121 is always communicated with the oil chamber 122 via the closed gap 104A of the lower bush 104 mentioned above.

Therefore, in accordance with the present embodiment, the following operations and effects can be achieved.

(a) The movable partition wall member 130 sections in a sealing manner the annular oil gap 121 between the outer tube 101 and the inner tube 102 and the oil chamber 122 in the lower portion of the movable partition wall member 130, in a state of pushing down with respect to the gas chamber 123 in the upper portion of the movable partition wall member 130 so as to make the volumetric capacity small. The oil attached to the outer periphery of the inner tube 102 and making an intrusion into the annular oil gap 121 lubricates the upper bush 103 and a lip of the oil seal 105 in accordance with a vertical movement of the inner tube 102. Further, the oil fully filled in the annular oil gap 121 directly lubricates the bushes 103 and 104. The movable partition wall member 130 executes a volume compensation and a temperature compensation in correspondence to a forward and backward movement of the inner tube 102 to the oil chamber 122 in the leading end, on the basis of the vertical movement.

The movable partition wall member 130 is constituted by the free piston or the bladder such as the rubber or the like, however, since the movable partition wall member 130 is constituted by a general-purpose product as is different from the specially ordered product such as the hollow formed body made of the synthetic resin pipe or the like in accordance with the prior art, the movable partition wall member 130 is inexpensive.

As a result, it is possible to inexpensively provide the front fork 100 in which the volumetric capacity of the gas chamber 123 is increased by reducing the volumetric capacity of the lower oil chamber 122 by the movable partition wall member 130, an extra oil amount is reduced, a filling amount of the lubricating oil for lubricating the bush 103, the oil seal 105 and the like in the opening portion 101A of the outer tube 101 is reduced, and a weight saving is intended.

(b) Since the movable partition wall member 130 is provided in the inner periphery in the leading end side of the inner tube 102, it is possible to make the volumetric capacity of the lower oil chamber 122 of the movable partition wall member 130 smaller, and it is possible to further achieve the weight saving.

(c) It is possible to further achieve the inexpensiveness of the front fork 100 in the items (a) and (b) mentioned above, by utilizing the closed gap 104A of the bush 104 originally provided in the inner periphery of the outer tube 101 as the communication passage between the annular oil gap 121 and the leading end side oil chamber 122 of the inner tube 102.

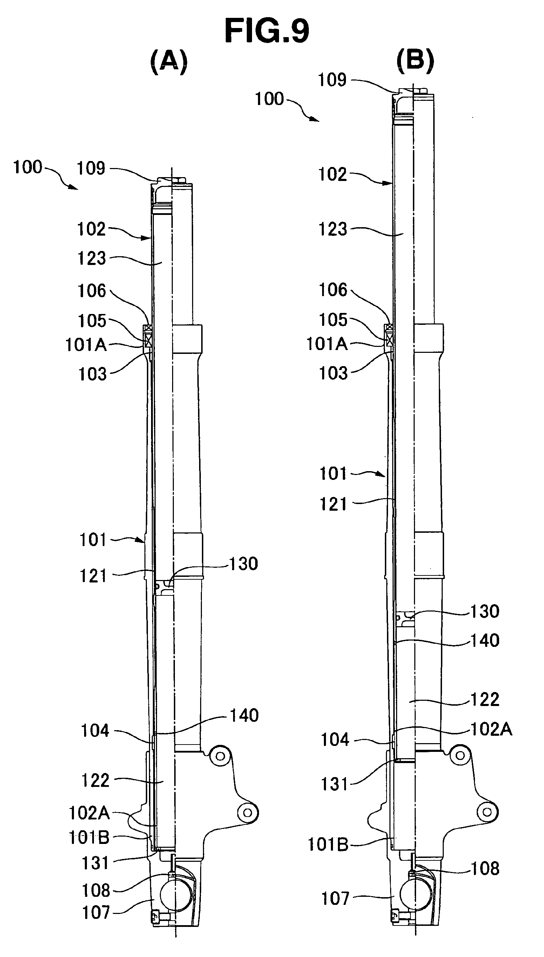

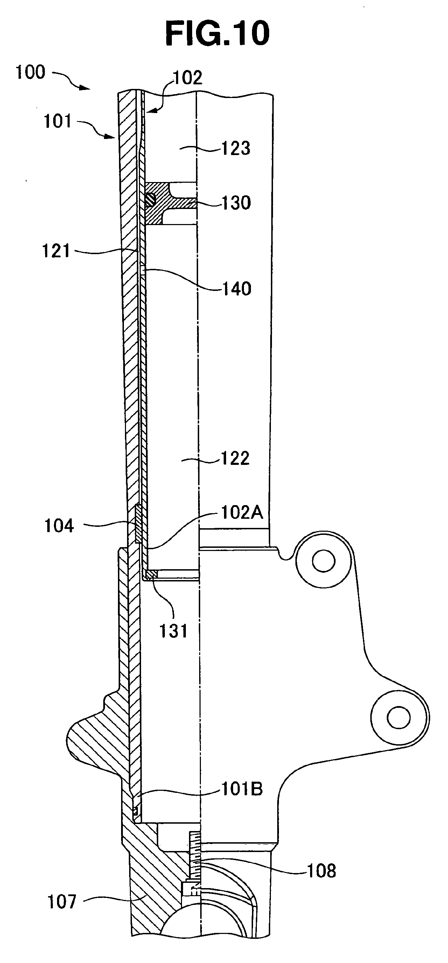

In this case, the front fork 100 may be structured, as shown in FIGS. 9 and 10, such that the annular oil gap 121 and the oil chamber 122 are always communicated by an oil hole 140 provided in a side wall of the inner tube 102. FIG. 9(A) shows a most contracted state of the front fork 100, and FIGS. 9(B) and 10 show a most expanded state of the front fork 100. In the most expanded state in FIGS. 9(A) and 10, since the movable partition wall member 130 moves downward at an amount at which the inner tube 102 gets out of the oil chamber 122, the oil hole 140 is necessarily provided at a position in the leading end side of the inner tube 102 which is neither closed by the movable partition wall member 130 nor open to the gas chamber 123.

It is possible to make the front fork 100 mentioned in the items (a) and (b) further inexpensive, by arranging the oil hole 140 always communicating the oil chamber 122 in the leading end side of the inner tube 102 and the annular oil gap 121 in the inner tube 102.

At this time, the lower bush 104 may be constituted by the annular body having the closed gap 104A as shown in FIGS. 5 and 6, or may be constituted by an annular body continuously provided in a peripheral direction and having no closed gap. In the case that the bush 104 is constituted by the annular body having no closed gap, the oil hole 140 is not closed by the bush 104, but is communicated with the annular oil gap 121, in the most contracted state in FIG. 9(A).

Further, the front fork 100 is not limited to the structure in which the oil is filled in the annular oil gap 121 between the outer tube 101 and the inner tube 102, but a slight amount of gas may be mixed into the oil within the annular oil gap 121. In the case that the gas is mixed into the annular oil gap 121, the working oil flows through the closed gap 104A of the bush 104 in accordance with the telescopic stroke of the inner tube 102. Accordingly, a damping force is generated in the closed gap 104A, and an operability of the inner tube 102 is deteriorated. In the case that no gas is mixed into the annular oil gap 121, the damping force mentioned above is not generated, and the operability of the telescopic stroke of the inner tube 102 is improved.

Further, the front fork 100 may be constituted by a structure employing the outer tube 101 in which the axle bracket 107 is integrally formed in the outer tube main body constituting the outer tube 101.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above, but should be understood to include all possible embodiments which can be encompassed within a scope of equivalents thereof with respect to the features set out in the appended claims.

## Claims

1. A front fork of a two-wheeled vehicle or the like in which an inner tube is slidably inserted into an outer tube,
wherein a leading end of said inner tube is inserted into said outer tube from an opening portion of said outer tube, and two bushes guiding said inner tube are fitted and attached to an inner periphery of an opening portion side of said outer tube, and an inner periphery of a base end side apart from said opening portion in an axial direction,
wherein an annular oil gap sectioned by said two bushes is provided between said outer tube and said inner tube,
wherein a movable partition wall member is provided in an inner periphery of said inner tube, an oil chamber is sectioned in a leading end side of said inner tube, and a gas chamber is sectioned in a base end side of said inner tube, and
said annular oil gap is communicated with the oil chamber in the leading end side of said inner tube, and said annular oil gap and said oil chamber are sectioned in a sealing manner with respect to said gas chamber by said movable partition wall member.

2. A front fork of a two-wheeled vehicle or the like as claimed in claim 1,
wherein said movable partition wall member is provided in an inner periphery of the leading end side of said inner tube, and a volumetric capacity of said oil chamber is made smaller.

3. A front fork of a two-wheeled vehicle or the like as claimed in claim 1 or 2, wherein said bush is attached within an annular groove formed in an inner periphery of a base end side of said outer tube in a state having a closed gap, and
wherein said annular oil gap and the oil chamber in the leading end side of said inner tube are communicated via the closed gap of said bush.

4. A front fork of a two-wheeled vehicle or the like as claimed in claim 1 or 2, wherein said inner tube is provided with an oil hole always communicating the oil chamber in the leading end side of said inner tube with said annular oil gap.

5. A front fork of a two-wheeled vehicle or the like as claimed in claim 3,
wherein said closed gap is formed so as to be inclined with respect to an axial direction of the bush.

6. A front fork of a two-wheeled vehicle or the like as claimed in any one of claims 1 to 5, wherein said movable wall member is constituted by a free piston sliding along the inner periphery of said inner tube in a liquid tight manner.

7. A front fork of a two-wheeled vehicle or the like as claimed in any one of claims 1 to 5, wherein said movable partition wall member is constituted by a bladder such as a rubber or the like in which an outer edge is sealed to the inner periphery of said inner tube.
